# EUROPÄISCHE PATENTSCHRIFT

(11) **EP 4 464 988 B1**
(45) Veröffentlichungstag und Bekanntmachung des Hinweises auf die Patenterteilung: **25.03.2026**
(21) Anmeldenummer: 23173744.6
(22) Anmeldetag: 16.05.2023
(51) Int. Cl.: G01D 11/24

(54) **SENSOR MIT GEHÄUSE UND KABEL**
SENSOR WITH HOUSING AND CABLE
CAPTEUR AVEC BOÎTIER ET CÂBLE

(43) Veröffentlichungstag der Anmeldung: 20.11.2024
(73) Patentinhaber: Leuze electronic GmbH + Co. KG, 73277 Owen/Teck (DE)
(72) Erfinder: Luthardt, Stephan, 73277 Owen (DE); Tull, Andreas, 82229 Seefeld (DE); Haberl, Paul, 80999 München (DE)
(74) Vertreter: Ruckh, Rainer Gerhard

(56) Entgegenhaltungen:
- EP-B1- 3 227 641
- DE-A1- 10 031 302
- DE-A1- 102008 037 208
- DE-B3- 102021 103 232

## Beschreibung

Die Erfindung betrifft einen Sensor.

Derartige Sensoren dienen generell zur Objekterfassung und weisen hierzu Sensorkomponenten auf, die in wenigstens einem Gehäuse integriert sind.

Ein Beispiel für derartige Sensoren sind optische Sensoren, die typisch wenigstens einen Lichtstrahlen emittierenden Sender und wenigstens einen Lichtstrahlen empfangenden Empfänger aufweisen. Mit diesen Sensorkomponenten erfolgt eine Objektdetektion innerhalb eines Erfassungsbereichs. In einer Auswerteeinheit als weiterer Sensorkomponente erfolgt eine Auswertung von Empfangssignalen des Empfängers, wodurch ein entsprechendes Ausgangssignal generiert wird, das an eine externe Einheit ausgegeben wird.

Als Anschlussmittel an externe Einheiten ist typischerweise ein Kabel vorgesehen. Über das Kabel erfolgt die Stromversorgung des Sensors. Zudem wird über das Kabel das Ausgangssignal ausgegeben.

Bei bekannten Sensoren sind Steckeranschlüsse vorgesehen, d.h. an einem Ende des Kabels befindet sich ein Stecker, der an den Sensor angeschlossen wird, wobei hierzu in einer Gehäusewand ein korrespondiertes Anschlussmittel, wie eine Buchse gelagert ist.

Derartige Anschlussmittel sind konstruktiv aufwändig und beanspruchen einen relativ großen Bauraum, was zu einer unerwünscht großen Bauform des Sensors führt.

Generell ist es auch möglich an Kabeln Tüllen anzubringen, um diese in einer Gehäuseöffnung des Gehäuses zu lagern. Zur Fixierung und Zugentlastung des Kabels mit der Tülle im Gehäuse sind weitere mechanische Komponenten erforderlich, was zu einem unerwünscht hohen konstruktiven Aufwand führt.

Die EP 3 227 641 B1 betrifft eine Sensoranordnung, die kabelgebunden ist, wobei Leiter eines Kabels durch einen Deckel eines Gehäuses geführt sind. Dabei werden die Leiter des Kabels angelötet und Schrumpfschläuche, die zuvor über die Leitungsenden gezogen worden sind, durch Wärmeeinwirkung aufgeschrumpft, wonach eine Zugentlastung umspritzt wird und somit der Deckel fest und unlösbar mit dem Kabel verbunden wird.

Die DE 10 2008 037 208 A1 betrifft eine Kabelhülle für ein Kabel mit einem Außenrohr und an einer Innenseite des Außenrohres angeordneten, sich überwiegend in einer axialen Richtung des Außenrohres erstreckenden Stegen.

Die DE 10 2021 103 232 B3 betrifft eine Anschlussvorrichtung für ein elektrisches und/oder elektronisches Gerät mit einem Gerätegehäuse, wie etwa ein Sensor einen Grundkörper mit einem geräteseitigen Ende einem vom geräteseitigen Ende abgewandten anschlussseitigen Ende sowie einem sich vom geräteseitigen Ende zum anschlussseitigen Ende erstreckenden Kanal, ein Sicherungselement zur Sicherung des Grundkörpers an einem Wandabschnitt des Gerätegehäuses und mindestens einen durch den Grundkörper vom anschlussseitigen Ende zum geräteseitigen Ende führenden Leiter umfasst. Der Grundkörper weist eine zum geräteseitigen Ende des Grundkörpers zugewandte erste Anschlagfläche auf. Das Sicherungselement weist eine der ersten Anschlagfläche zugewandte, zweite Anschlagfläche auf.

Die DE 100 31 202 A1 bezieht sich auf eine Winkelmesseinrichtung mit einem Gehäuse, das in einer Gehäusewand, die eine kreisförmige Grundfläche des Gehäuses bildet, mindestens eine Öffnung aufweist, einem Deckel zum Verschließen der mindestens einen Öffnung, und mindestens einer an der Gehäusewand vorgesehenen Befestigungsstelle zum Fixieren des Deckels bezüglich der Gehäusewand. Weiterhin ist eine Steckverbindung mit einem Anschlusskabel vorhanden.

Der Erfindung liegt die Aufgabe zugrunde einen zuverlässigen, sicheren und gleichzeitig konstruktiv einfachen Kabelanschluss mit Zugentlastung für einen Sensor bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen Sensor mit einem Gehäuse, in welchem Sensorkomponenten integriert sind. Als Anschlussmittel ist ein Kabel vorhanden, das in einer Gehäuseöffnung in einer Gehäusewand des Gehäuses gelagert ist. Eine Tülle ist vorhanden, die durch Umspritzen einer Mantelfläche des Kabels mit Tüllenmaterial hergestellt ist. Die Tülle ist in die Gehäuseöffnung eingepresst und weist ein Verriegelungssegment auf, mittels dessen die Tülle gegen ein Herauslösen aus dem Gehäuse gesichert ist.

Damit ist zugleich eine Zugentlastung gewährleistet.

Als mechanisches Anschlussmittel zum Anschluss eines Kabels an den Sensor ist erfindungsgemäß das Kabel an einem Segment seiner Mantelfläche mit Tüllenmaterial umspritzt, wodurch eine Tülle gebildet wird.

Die Geometrie der Tülle ist an die Geometrie einer Gehäuseöffnung des Sensors angepasst. Die Tülle wird dabei in die Gehäuseöffnung eingepresst und ist dann in ihren Solllagen im Gehäuse mittels eines Verriegelungssegments, das Bestandteil der Tülle ist, lagefixiert und lagegesichert.

Diese Fixierung kann auch zusätzlich durch andere Bauteile erfolgen, die ohnehin im Gehäuse vorhanden sind, wie z.B. ein Gehäusedeckel oder eine Leiterplatte. Diese weisen eine entsprechende Gegenkontur zur Fixierung des Verriegelungselements auf.

Die Tülle kann durch den Spritzvorgang rationell und kostengünstig gefertigt werden. Durch eine geeignete Spritzform kann die Geometrie der Tülle einfach vorgegeben und an die Gehäuseöffnung und das Gehäuseinnere angepasst werden.

Ein wesentlicher Vorteil der Erfindung besteht darin, als Bestandteil der Tülle das Verriegelungssegment vorzusehen, d. h. das Verriegelungssegment wird ohne zusätzlichen Aufwand im Spritzvorgang zur Herstellung der Tülle hergestellt.

Damit wird als wesentlicher Vorteil erhalten, dass allein mit Komponenten der Tülle die Lagefixierung des Kabels in der Gehäuseöffnung, ggf. mit der Gehäusegeometrie und dem Gehäuseinneren, erfolgt, d.h. es sind keine weiteren, zusätzlichen Befestigungsbauteile erforderlich. Die Fixierung kann auch durch die Montage eines Gehäusedeckels oder durch Montage weiterer Gerätebestandteile, wie z.B. einer Leiterplatte erfolgen. Die Sicherung gegen Herausrutschen wird allein durch die ohnehin nötige Montage anderer Komponenten (z.B. Gehäusedeckel, Leiterplatte, o.ä.) hergestellt.

Ein weiterer wesentlicher Vorteil besteht darin, dass allein durch das Einpressen der Tülle in die Gehäuseöffnung und das Einlegen in die dazu passende Gehäusegeometrie die Lagefixierung und damit auch die Zugentlastung des Kabels so erfolgt, dass keine weiteren Arbeitsschritte zur Fixierung der Tülle in der Gehäuseöffnung erforderlich sind.

Vorteilhaft besteht die Tülle aus einem elastisch verformbaren Tüllenmaterial.

Dadurch kann die Tülle unter elastischer Verformung in die Gehäuseöffnung eingepresst werden und für die Lagefixierung in die dafür vorgesehene Geometrie im Gehäuseinneren positioniert werden.

Vorteilhaft besteht das Tüllenmaterial aus einem elastisch verformbaren Kunststoff.

Vorteilhaft weist die Tülle einen sich über den gesamten Umfang der äußeren Mantelfläche des Kabels erstreckenden Tüllenkörper auf.

Die Tülle umschließt das Kabel somit allseitig und liegt über den gesamten Umfang in der Gehäuseöffnung, wodurch ein gleichförmiger Sitz der Tülle in der Gehäuseöffnung erhalten wird.

Die Geometrie der Tülle ist dabei an die Geometrie der Gehäuseöffnung angepasst, wobei die Tülle insbesondere einen rotationssymetrischen Körper ausbildet.

Besonders vorteilhaft liegt bei in die Gehäuseöffnung eingepresster Tülle das Verriegelungssegment an der Innenseite des die Gehäuseöffnung begrenzenden Segments der Gehäusewand an oder einer Gehäusegeometrie im Inneren des Gehäuses.

Korrespondierend hierzu ist die Tülle an ihrem frontseitigen Ende in Form eines Ringsegments verbreitert. Bei in die Gehäuseöffnung eingepresster Tülle liegt des Ringsegments mit einer Anlagefläche an der Außenseite des die Gehäuseöffnung begrenzenden Segments der Gehäusewand an.

Die Anlagenflächen des Verriegelungssegments einerseits und des Ringsegments der Tülle andererseits, liegen bei in der Gehäuseöffnung eingepresster Tülle an gegenüberliegenden Seiten der Gehäusewand dicht, vorzugsweise formschlüssig an und bewirken so eine stabile Lagefixierung der Tülle in der Gehäuseöffnung.

Gemäß einer konstruktiv vorteilhaften Ausgestaltung ist das Verriegelungssegment von einer vom Tüllenkörper in radialer Richtung hervorstehenden Rastnase gebildet.

Dabei weist die Rastnase eine Einführschräge zur Einführung in die Gehäuseöffnung und eine Anlagefläche zur Anlage an der Innenseite der Gehäusewand auf.

Die Einführschräge erleichtert das Einführen der Tülle in die Gehäuseöffnung. Sobald die Rastnase komplett in das Gehäuse gezogen ist, liegt die Anlagefläche an der Gehäusewand im Gehäuse an.

Die Tülle wird durch die Rastnase im Gehäuse fixiert und sichert die Tülle positionsstabil.

Gemäß einer alternativen Ausgestaltung kann die Rastnase an einem Gehäuseteil oder einem Bauteil wie einer Leiterplatte im Innenraum des Gehäuses fixiert sein.

Gemäß einer vorteilhaften Ausführungsform sind an der Tülle Zugentlastungsmittel für das Kabel vorhanden.

Damit wird das Kabel zusätzlich zu der Lagesicherung mit dem Verriegelungssegment gegen Beeinträchtigungen bei auftretender Zugbelastung geschützt.

Vorteilhaft sind als Zugentlastungsmittel, je nach Zuglastanforderung eine oder mehrere (Metall-)Hülsen vorgesehen, die an dem Kabel durch Crimpen befestigt ist.

Die oder jede Hülse wird mit einer Crimpzange am Kabel verpresst. Durch die Crimpung sind die Litzen des Kabels gegen Verschiebungen bei Auftreten von Zugkräften geschützt.

Nachdem die Hülse mit der Crimpzange am Kabel verpresst wurde, wird die Hülse mit dem die Tülle bildenden Tüllenmaterial umspritzt.

Die Tülle ummantelt somit auch die Hülse am Kabel, wodurch die Hülse geschützt in der Tülle liegt. Zudem unterstützt die Tülle die zugentlastende Wirkung, indem die in die Gehäuseöffnung eingepresste Tülle Druckkräfte auf das Kabel und die Hülse ausübt.

Gemäß einer weiteren vorteilhaften Ausführungsform ist an der Tülle ein Dichtmittel gelagert.

Damit ist die Nahtstelle zwischen Tülle und Gehäuseöffnung abgedichtet, so dass keine Feuchtigkeit und kein Schmutz in den Innenraum des Gehäuses gelangen kann.

Gemäß einer konstruktiv vorteilhaften Ausgestaltung ist das Dichtmittel ein O-Ring.

Dabei ist der O-Ring in einer Nut der Tülle gelagert.

Der Sensor kann beispielsweise als Radarsensor oder Ultraschallsensor ausgebildet sein. Besonders vorteilhaft ist der Sensor ein optischer Sensor.

Der optische Sensor kann beispielsweise als Distanzsensor, Reflexionslichtschranke, Lichttaster, Scanner, Codeleser oder dergleichen ausgebildet sein, wobei dann der optische Sensor nur ein Gehäuse aufweist, in welchem der erfindungsgemäße Kabelanschluss vorhanden ist.

Der optische Sensor kann weiterhin auch als Lichtschranke, Lichtgitter oder Lichtvorhang ausgebildet sein. In diesem Fall weist der optische Sensor zwei Gehäuse auf, wobei jedes Gehäuse den erfindungsgemäßen Kabelanschluss aufweisen kann.

Die Erfindung wird im Folgenden anhand der Zeichnungen erläutert. Es zeigen:
- Figur 1:: Ausführungsbeispiel des erfindungsgemäßen Sensors im Form eines optischen Sensors.
- Figur 2:: Erste Ausführungsform des erfindungsgemäßen Kabelanschlusses für den Sensor gemäß Figur 1.
- Figur 3a:: Zweite Ausführungsform des erfindungsgemäßen Kabelanschlusses für den Sensor gemäß Figur 1
- Figur 3b:: Querschnittsdarstellung des Anordnung gemäß Figur 3a.

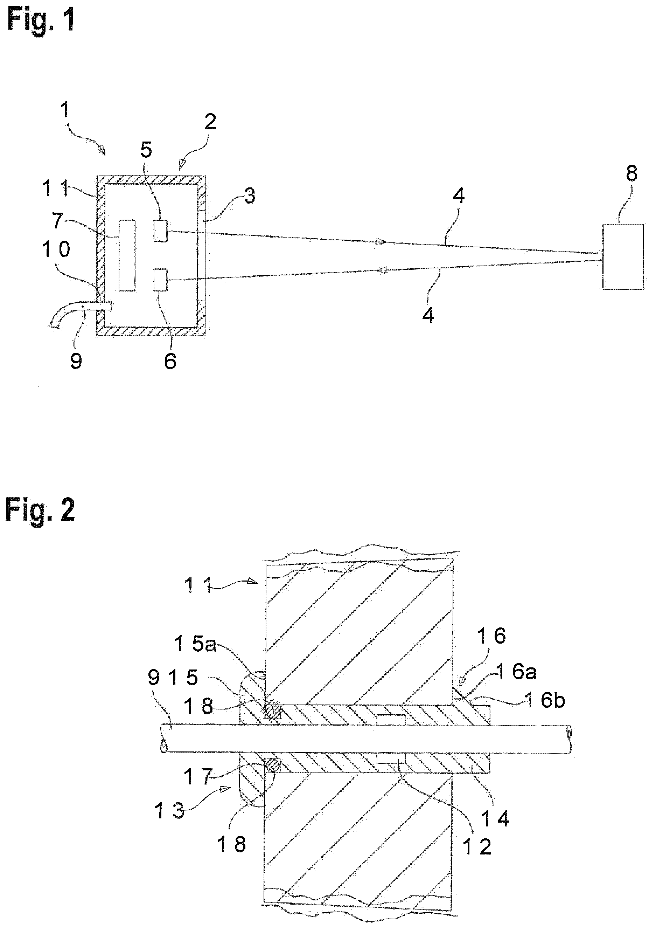

Figur 1 zeigt ein Ausführungsbeispiel des erfindungsgemäßen Sensors in Form eines optischen Sensors 1.

Die Sensorkomponenten des optischen Sensors 1 sind in einem Gehäuse 2 integriert, in dessen Frontwand ein Austrittsfenster 3 vorhanden ist.

Der optischer Sensor 1 ist im vorliegenden Fall als Lichttaster ausgebildet und weist einen Lichtstrahlen 4 emittierenden Sender 5 und einen Lichtstrahlen 4 empfangenden Empfänger 6 auf. Der Sender 5 kann von einer Leuchtdiode gebildet sein, wobei dem Sender 5 eine nicht dargestellte Sendeoptik zur Strahlformung der Lichtstrahlen 4 zugeordnet sein kann. Der Empfänger 6 kann von einer Photodiode gebildet sein, wobei dem Empfänger 6 eine nicht dargestellte Empfangsoptik zur Fokussierung der Lichtstrahlen 4 auf den Empfänger 6 zugeordnet sein kann.

Der optische Sensor 1 weist weiterhin eine Auswerteeinheit 7 auf, die von einem Mikroprozessor oder dergleichen gebildet sein kann. Die Auswerteeinheit 7 dient zur Ansteuerung des Senders 5 und Empfängers 6 und zur Auswertung von Empfangssignalen des Empfängers 6.

Mit dem optischen Sensor 1 erfolgt eine Erfassung von Objekten 8 in einem Erfassungsbereich. Die von Sendern 5 emittierten Lichtstrahlen 4 werden durch das Austrittsfenster 3 in den Erfassungsbereich geführt. Die Lichtstrahlen 4 werden an einem Objekt 8 im Erfassungsbereich reflektiert und dann durch das Austrittsfenster 3 zurück zum Empfänger 6 geführt.

Abhängig von den Empfangssignalen des Empfängers 6 wird in der Auswerteeinheit 7 ein Objektfeststellungssignal generiert, dessen Signalzustände angeben, ob sich ein Objekt 8 im Erfassungsbereich befindet oder nicht.

Das Objektfeststellungssignal wird als Ausgangssignal vom optischen Sensor 1 an eine externe Einheit ausgegeben. Hierzu ist als Anschlussmittel ein Kabel 9 vorhanden, das in einer Gehäuseöffnung 10 einer Gehäusewand 11 des Gehäuses 2 des optischen Sensors 1 gelagert ist. Über das Kabel 9 erfolgt auch die Stromversorgung des optischen Sensors 1.

Figur 2 zeigt in einer Detaildarstellung die Ausbildung des erfindungsgemäßen Kabelanschlusses.

Auf der Mantelfläche des Kabels 9 ist eine Hülse 12 aufgepresst. Generell können auch mehrere Hülsen 12 aufgepresst sein. Das Aufpressen der Hülse 12 erfolgt mit einer Crimpzange. Dadurch werden Litzen im Kabel 9 lagestabilisiert, wodurch eine Zugentlastung des Kabels 9 bewirkt wird. Die Hülse besteht vorteilhaft aus einem metallischen Material.

Erfindungsgemäß ist auf einem Abschnitt des Kabels 9, in dem auch die Hülse 12 vorhanden ist, eine Tülle 13 aufgebracht. Die Tülle 13 wird durch Umspritzen der Mantelfläche mit einem Tüllenmaterial hergestellt. Das Tüllenmaterial ist vorteilhaft elastisch verformbar und besteht insbesondere aus einem Kunststoff. Durch Vorgabe einer geeigneten Spritzform kann die Geometrie der Tülle 13 frei gewählt werden.

Die Tülle 13 erstreckt sich über den gesamten Umfang der Mantelfläche des Kabels 9, d.h. die Tülle 13 umschließt das Kabel 9 vollständig. Die Außenkontur der Tülle 13 ist an die Außenkontur und Größe der Gehäuseöffnung 10 angepasst, die einen kreisförmigen oder auch einen nicht rotationsymmetrischen Querschnitt aufweisen kann. Die Länge und der Durchmesser der Tülle 13 sind, wie Figur 2 zeigt, an die Länge und den Durchmesser der Gehäuseöffnung 10 angepasst.

Da das Kabel 9 erst nach Aufbringen der Hülse 12 mit dem Tüllenmaterial zur Ausbildung der Tülle 13 umspritzt wird, umgibt die Tülle 13 auch die Hülse 12 und unterstützt die Wirkung der Zugentlastung.

Die Tülle 13 weist einen an der Mantelfläche des Kabels 9 anliegenden Tüllenkörper 14 auf. An einem längsseitigen Ende des Tüllenkörpers 14 befindet sich ein Ringsegment 15, das eine Verbreiterung der Tülle 13 bildet, d.h. der Außendurchmesser des Ringsegments 15 ist größer, als die Außendurchmesser des Tüllenkörpers 14.

Das Ringsegment 15 weist eine ebene Anlagefläche 15a auf.

Am gegenüberliegenden längsseitigen Ende des Tüllenkörpers 14 befindet sich ein Verriegelungssegment, das im vorliegenden Fall von einer Rastnase 16 gebildet ist. Die Rastnase 16 steht in radialer Richtung über die Mantelfläche des Tüllenkörpers 14 hervor. Die Rastnase 16 weist eine ebene Anlagefläche 16a und eine Einführschräge 16b auf.

Das Ringsegment 15 und die Rastnase 16 sind Bestandteile der Tülle 13 und einstückig mit dem Tüllenkörper 14 ausgebildet.

Die erfindungsgemäße Tülle 13 bildet ein Einpressteil, das in die Gehäuseöffnung 10 eingepresst und/oder eingezogen wird. Bei dem Einpressvorgang wird die Einführschräge 16b gegen den Rand der Gehäuseöffnung 10 geführt, wodurch sich die Rastnase 16 verformt. Sobald nach dem Einpressvorgang die Tülle 13 in ihrer Sollposition in der Gehäuseöffnung 10 angeordnet ist, liegt die Rastnase 16 im Inneren des Gehäuses und nimmt wieder ihre ursprüngliche Form an (dargestellt in Figur 2).

Die Tülle 13 mit dem Kabel 9 wird so weit in die Gehäuseöffnung 10 eingeführt, bis die Anlagefläche 15a des Ringsegments 15 an der Außenseite der die Gehäuseöffnung 10 begrenzenden Gehäusewand 11 dicht anliegt. Ist dies der Fall ragt die Rastnase 16 über die Gehäuseöffnung 10 hervor und liegt mit ihrer Anlagefläche 16a dicht an der Innenseite der die Gehäuseöffnung 10 begrenzenden Gehäusewand 11 an. Die Abstände der Anlageflächen 15a, 16b sind so bemessen und an die Länge der Gehäuseöffnung 10 angepasst, dass durch diese die Tülle 13 spielfrei und positionsstabil in der Gehäuseöffnung 10 gelagert ist.

Wie Figur 2 zeigt ist in einer Nut 17 der Tülle 13 ein O-Ring 18 gelagert, der ein Dichtmittel bildet. Dadurch ist die Nahtstelle zwischen dem Rand der Gehäuseöffnung 10 und der Tülle 13 gegen Eindringen von Schmutz und Feuchtigkeit gesichert.

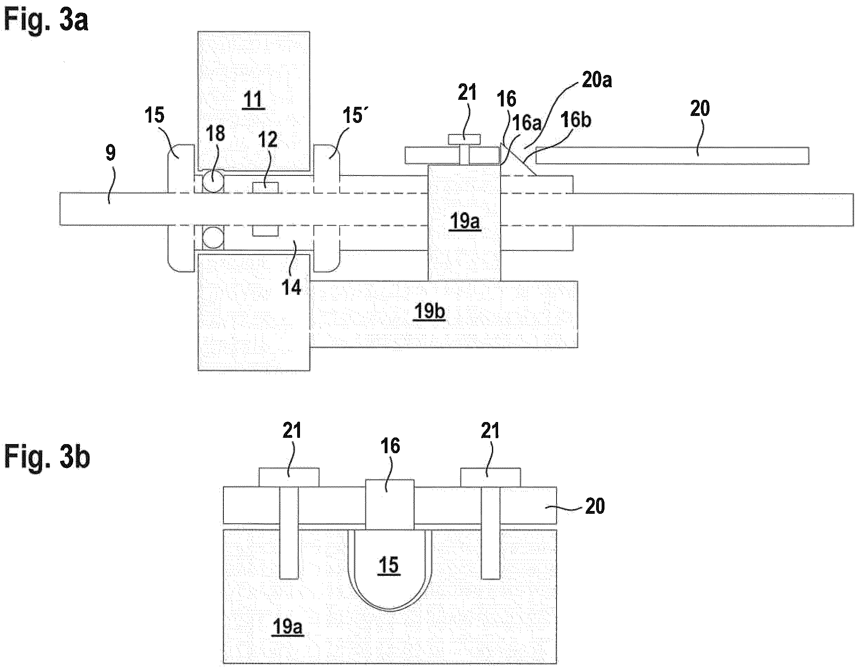

Die Figuren 3a, 3b zeigen eine weitere Ausführungsform des erfindungsgemäßen Kabelanschlusses für den optischen Sensor 1.

Wie auch in Figur 2 ist in Figur 3a die Gehäusewand 11 mit der Gehäuseöffnung 10 dargestellt, in welcher das Kabel 9 gelagert wird.

Figur 3a zeigt weiterhin zwei Gehäuseteile 19a , 19b im Innenraum des Gehäuses 2. Das obere Gehäuseteil 19a ist auf dem unteren Gehäuseteil 19b gelagert. An dem oberen Gehäuseteil 19a ist eine Leiterplatte 20 mit zwei Schrauben 21 (Figuren 3a, 3b) befestigt.

Das obere Gehäuseteil 19a liegt parallel in Abstand zur Gehäusewand 11.

Auf dem Kabel 9 ist wieder die Hülse 12 gelagert und mit der Tülle 13 umspritzt. Der Tüllenkörper 14 ist länger als im Ausführungsbeispiel gemäß Figur 2.

Am Tüllenkörper 14 münden im vorliegenden Fall zwei Ringsegmente 15, 15' aus, die spiegelsymmetrisch zu einer Ebene senkrecht zur Längsachse des Kabels 9 ausgebildet sind.

Der Abstand der Ringsegmente 15 entspricht der Dicke der Gehäusewand 11. Da die Ringsegmente 15, 15' und insbesondere das Ringsegment 15' elastisch verformbar sind, kann die Tülle 13 durch die Gehäuseöffnung 10 gezogen werden, so dass nach dem Einführen die Ringsegmente 15, 15' beidseits gegenüberliegenden Wandsegmenten der Gehäusewand 11 anliegen, wodurch eine erste Lagefixierung des Kabels 9 mit der Tülle 13 erfolgt.

Wie aus Figur 3a ersichtlich ist in Abstand zum inneren Ringsegment 15 eine am Tüllenkörper 14 ausmündende Rastnase 16 vorgesehen, die in eine Öffnung 20a der Leiterplatte 20 ragt.

Die Anlagefläche 15a der Rastnase 16 liegt mit Anpressdruck an Grenzflächen der Leiterplatte 20 und des oberen Gehäuseteils 19a an so dass diese begrenzende Elemente bilden, die durch die Anlage der Rastnase 16 zur Lagefixierung des Kabels 9 mit der Tülle 13 führen.

Generell kann auch nur das obere Gehäuseanteil 19a oder nur die Leiterplatte 20 das begrenzende Element bilden, so dass dann die Rastnase 16 nur an diesem einen begrenzenden Element anliegt.

### Bezugszeichenliste

- (1): Sensor
- (2): Gehäuse
- (3): Austrittsfenster
- (4): Lichtstrahl
- (5): Sender
- (6): Empfänger
- (7): Auswerteeinheit
- (8): Objekt
- (9): Kabel
- (10): Gehäuseöffnung
- (11): Gehäusewand
- (12): Hülse
- (13): Tülle
- (14): Tüllenkörper
- (15, 15'): Ringsegment
- (15a, 15b): Anlagefläche
- (16): Rastnase
- (16a): Anlagefläche
- (16b): Einführschräge
- (17): Nut
- (18): O-Ring
- (19a): oberes Gehäuseteil
- (19b): unteres Gehäuseteil
- (20): Leiterplatte
- (20a): Öffnung
- (21): Schraube

## Patentansprüche

1. Sensor mit einem Gehäuse (2), in welchem Sensorkomponenten integriert sind, wobei als Anschlussmittel ein Kabel (9) vorhanden ist, das in einer Gehäuseöffnung (10) in einer Gehäusewand (11) des Gehäuses (2) gelagert ist, wobei eine Tülle (13) vorhanden ist, die durch Umspritzen einer Mantelfläche des Kabels (9) mit Tüllenmaterial hergestellt ist, **dadurch gekennzeichnet, dass** die Tülle (13) in die Gehäuseöffnung (10) eingepresst ist und wobei die Tülle (13) ein Verriegelungssegment aufweist, mittels dessen die Tülle (13) gegen ein Herauslösen aus dem Gehäuse (2) gesichert ist.

2. Sensor nach Anspruch 1, **dadurch gekennzeichnet, dass** die Tülle (13) aus einem elastisch verformbaren Tüllenmaterial besteht.

3. Sensor nach einem der Ansprüche 1 oder 2, **dadurch gekennzeichnet, dass** die Tülle (13) einen sich über den gesamten Umfang der äußeren Mantelfläche des Kabels (9) erstreckenden Tüllenkörper (14) aufweist.

4. Sensor nach einem der Ansprüche 1 bis 3, **dadurch gekennzeichnet, dass** bei in die Gehäuseöffnung (10) eingepresster Tülle (13) das Verriegelungssegment an der Innenseite des die Gehäuseöffnung (10) begrenzenden Segments der Gehäusewand (11) oder an einem begrenzenden Element im Innenraum des Gehäuses (2) anliegt.

5. Sensor nach einem der Ansprüche 3 und 4, **dadurch gekennzeichnet, dass** das Verriegelungssegment von wenigstens einer vom Tüllenkörper (14) in radialer Richtung hervorstehenden Rastnase (16) gebildet ist.

6. Sensor nach Anspruch 5, **dadurch gekennzeichnet, dass** die Rastnase (16) eine Einführschräge (16b) zur Einführung in die Gehäuseöffnung (10) und eine Anlagefläche (16a) zur Anlage an der Innenseite der Gehäusewand (11) oder an dem begrenzenden Element aufweist.

7. Sensor nach einem der Ansprüche 1 bis 6, **dadurch gekennzeichnet, dass** die Tülle (13) an ihrem frontseitigen Ende in Form eines Ringsegments (15) verbreitert ist, wobei bei in die Gehäuseöffnung (10) eingepresster Tülle (13) das Ringsegment (15) mit einer Anlagefläche (15a) an der Außenseite des die Gehäuseöffnung (10) begrenzenden Segments der Gehäusewand (11) anliegt.

8. Sensor nach einem der Ansprüche 1 bis 7, **dadurch gekennzeichnet, dass** an der Tülle (13) Zugentlastungsmittel für das Kabel (9) vorhanden sind.

9. Sensor nach Anspruch 8, **dadurch gekennzeichnet, dass** als Zugentlastungsmittel wenigstens eine Hülse (12) vorhanden ist, die an dem Kabel (9) durch Crimpen befestigt ist.

10. Sensor nach Anspruch 9, **dadurch gekennzeichnet, dass** die Hülse (12) mit dem die Tülle (13) bildenden Tüllenmaterial umspritzt ist.

11. Sensor nach Anspruch 10, **dadurch gekennzeichnet, dass** die Tülle (13) und die Hülse (12) ein Zugentlastungsmittel bilden.

12. Sensor nach einem der Ansprüche 1 bis 11, **dadurch gekennzeichnet, dass** an der Tülle (13) ein Dichtmittel gelagert ist.

13. Sensor nach Anspruch 12, **dadurch gekennzeichnet, dass** das Dichtmittel ein O-Ring (18) ist.

14. Sensor nach Anspruch 13, **dadurch gekennzeichnet, dass** der O-Ring (18) in einer Nut (17) der Tülle (13) gelagert ist.

15. Sensor nach einem der Ansprüche 1 bis 14, **dadurch gekennzeichnet, dass** dieser ein optischer Sensor (1) ist.

## Claims

1. Sensor with a housing (2) in which sensor components are integrated, wherein a cable (9) is provided as a connection means, which is mounted in a housing opening (10) in a housing wall (11) of the housing (2), wherein a grommet (13) is provided, which is produced by overmoulding a surface of the cable (9) with grommet material, **characterised in that** the grommet (13) is pressed into the housing opening (10) and the grommet (13) has a locking segment by means of which the grommet (13) is secured against being pulled out of the housing (2).

2. Sensor according to claim 1, **characterised in that** the sleeve (13) consists of an elastically deformable sleeve material.

3. Sensor according to one of claims 1 or 2, **characterised in that** the grommet (13) has a grommet body (14) extending over the entire circumference of the outer surface of the cable (9).

4. Sensor according to one of claims 1 to 3, **characterised in that**, when the grommet (13) is pressed into the housing opening (10), the locking segment rests against the inside of the segment of the housing wall (11) delimiting the housing opening (10) or against a delimiting element in the interior of the housing (2).

5. Sensor according to one of claims 3 and 4, **characterised in that** the locking segment is formed by at least one locking lug (16) protruding radially from the grommet body (14).

6. Sensor according to claim 5, **characterised in that** the locking lug (16) has an insertion bevel (16b) for insertion into the housing opening (10) and a contact surface (16a) for contact with the inside of the housing wall (11) or with the limiting element.

7. Sensor according to one of claims 1 to 6, **characterised in that** the grommet (13) is widened at its front end in the form of a ring segment (15), wherein, when the grommet (13) is pressed into the housing opening (10), the ring segment (15) abuts against a contact surface (15a) against the outside of the segment of the housing wall (11) delimiting the housing opening (10).

8. Sensor according to one of claims 1 to 7, **characterised in that** strain relief means for the cable (9) are provided on the grommet (13).

9. Sensor according to claim 8, **characterised in that** at least one sleeve (12) is provided as a strain relief means, which is attached to the cable (9) by crimping.

10. Sensor according to claim 9, **characterised in that** the sleeve (12) is overmoulded with the grommet material forming the grommet (13).

11. Sensor according to claim 10, **characterised in that** the grommet (13) and the sleeve (12) form a strain relief means.

12. Sensor according to one of claims 1 to 11, **characterised in that** a sealing means is mounted on the grommet (13).

13. Sensor according to claim 12, **characterised in that** the sealing means is an O-ring (18).

14. Sensor according to claim 13, **characterised in that** the O-ring (18) is mounted in a groove (17) in the grommet (13).

15. Sensor according to one of claims 1 to 14, **characterised in that** it is an optical sensor (1).

## Revendications

1. Capteur avec un boîtier (2) dans lequel sont intégrés des composants du capteur, dans lequel un câble (9) est prévu comme moyen de connexion, qui est monté dans une ouverture (10) dans une paroi (11) du boîtier (2), dans lequel un passe-câble (13) est prévu, qui est produit par surmoulage d'une surface du câble (9) avec un matériau de passe-câble, **caractérisé en ce que** le passe-câble (13) est pressé dans l'ouverture (10) du boîtier et le passe-câble (13) comporte un segment de verrouillage au moyen duquel le passe-câble (13) est protégé contre un retrait du boîtier (2).

2. Capteur selon la revendication 1, **caractérisé en ce que** le manchon (13) est constitué d'un matériau de manchon élastiquement déformable.

3. Capteur selon l'une des revendications 1 ou 2, **caractérisé en ce que** le passe-câble (13) comporte un corps de passe-câble (14) s'étendant sur toute la circonférence de la surface extérieure du câble (9).

4. Capteur selon l'une des revendications 1 à 3, **caractérisé en ce que**, lorsque le passe-câble (13) est enfoncé dans l'ouverture du boîtier (10), le segment de verrouillage repose contre l'intérieur du segment de la paroi du boîtier (11) délimitant l'ouverture du boîtier (10) ou contre un élément de délimitation à l'intérieur du boîtier (2).

5. Capteur selon l'une des revendications 3 et 4, **caractérisé en ce que** le segment de verrouillage est formé par au moins une patte de verrouillage (16) faisant saillie radialement à partir du corps de passe-câble (14).

6. Capteur selon la revendication 5, **caractérisé en ce que** la patte de verrouillage (16) présente un biseau d'insertion (16b) pour l'insertion dans l'ouverture du boîtier (10) et une surface de contact (16a) pour le contact avec la face intérieure de la paroi du boîtier (11) ou avec l'élément de délimitation.

7. Capteur selon l'une des revendications 1 à 6, **caractérisé en ce que** le passe-fil (13) est élargi à son extrémité avant sous la forme d'un segment annulaire (15), dans lequel, lorsque le passe-fil (13) est enfoncé dans l'ouverture du boîtier (10) ( ), le segment annulaire (15) vient en butée contre une surface de contact (15a) sur la face extérieure du segment de la paroi du boîtier (11) délimitant l'ouverture du boîtier (10).

8. Capteur selon l'une des revendications 1 à 7, **caractérisé en ce que** des moyens de décharge de traction pour le câble (9) sont prévus sur le passe-câble (13).

9. Capteur selon la revendication 8, **caractérisé en ce qu'**au moins un manchon (12) est prévu comme moyen de décharge de traction, qui est fixé au câble (9) par sertissage.

10. Capteur selon la revendication 9, **caractérisé en ce que** le manchon (12) est surmoulé avec le matériau formant le passe-câble (13).

11. Capteur selon la revendication 10, **caractérisé en ce que** le passe-câble (13) et le manchon (12) forment un moyen de décharge de traction.

12. Capteur selon l'une des revendications 1 à 11, **caractérisé en ce qu'**un moyen d'étanchéité est monté sur le passe-fil (13).

13. Capteur selon la revendication 12, **caractérisé en ce que** le moyen d'étanchéité est un joint torique (18).

14. Capteur selon la revendication 13, **caractérisé en ce que** le joint torique (18) est monté dans une rainure (17) dans l'œillet (13).

15. Capteur selon l'une des revendications 1 à 14, **caractérisé en ce qu'**il s'agit d'un capteur optique (1).
